# EUROPEAN PATENT APPLICATION

(11) **EP 4 723 592 A1**
(43) Date of publication of application: **08.04.2026**
(21) Application number: 24830582.3
(22) Date of filing: 19.06.2024
(51) Int. Cl.: H04L 61/50, H04L 61/5038

(54) **ADDRESS ALLOCATION METHOD, BATTERY MODULE MANAGEMENT METHOD, AND ELECTRONIC DEVICE**

(30) Priority: 30.06.2023 CN 202310803137
(71) Applicant: ZTE CORPORATION, Shenzhen, Guangdong 518057 (CN)
(72) Inventor: XIONG, Yong, Shenzhen, Guangdong 518057 (CN); CAO, Jie, Shenzhen, Guangdong 518057 (CN); XIAO, Shengxian, Shenzhen, Guangdong 518057 (CN); MA, Guohua, Shenzhen, Guangdong 518057 (CN); WANG, Yong, Shenzhen, Guangdong 518057 (CN); YANG, Ruijian, Shenzhen, Guangdong 518057 (CN)
(74) Representative: Ziebig Hengelhaupt Intellectual Property Attorneys Patentanwaltskanzlei PartGmbB
(86) International application number: PCT/CN2024/100021
(87) International publication number: WO 2025/001936

(57) **Abstract**

The present application relates to the technical field of communications, and discloses an address allocation method, a battery module management method, and an electronic device. The address allocation method comprises: acquiring first device direct-current internal resistance of a first node and second device direct-current internal resistance of a plurality of second nodes that are in communication connection with the first node; according to a preset test rule, sequentially determining cable direct-current resistance between the first node and each second node among the plurality of second nodes; on the basis of the first device direct-current internal resistance, the second device direct-current internal resistance, and the cable direct-current resistance, determining the cable resistance value of a transmission cable between the first node and each second node; and on the basis of an ascending order of the cable resistance value, allocating a network address for each second node.

## Description

### CROSS REFERENCE TO RELATED APPLICATIONS

The present application claims priority to Chinese Patent Application No. 202310803137.X filed on June 30, 2023, entitled "Address allocation method, battery module management method, and electronic device", the entirety of which is incorporated herein by reference.

### TECHNICAL FIELD

The embodiments of the present application relate to the technical field of industrial control, in particular relate to an address allocation method, a battery module management method, and an electronic device.

### BACKGROUD

With the development of technology and the improvement of living standards, electronic products in the field of industrial control, healthcare, communication, and consumption, etc., are becoming increasingly intelligent, an embedded system with a microprocessor as the core has been widely used, and on-site networking and management of these intelligent devices have become the focus of embedded applications.

In the field of industrial control, an embedded device realizes Controller Area Network CAN communication at the field device level by means of a field bus such as RS485 and CAN. One embedded device (called a master) can monitor other embedded devices (called slaves). Due to the large number of slaves, a master typically uses device communication addresses to distinguish individual slaves. When a slave fails, loses its address, or encounters bus conflicts due to duplicate addresses, it is necessary to reallocate communication addresses to ensure normal communication.

The existing address allocation methods generally include the following types:
(1) DIP switch configuration. The slave needs to be configured equipped with a DIP switch, each DIP switch has a plurality of key positions, and the key positions of DIP switches of different slaves should be different from each other.
(2) Pairing. When the pairing method is used, the slaves are triggered one by one to enter a pairing mode by means of buttons; and after pairing, the pairing mode exits by means of the buttons.
(3) Sequential power-on. The slaves which need address configuration are powered on in sequence (while keeping other slaves powered off or inactive), and the master sequentially completes address configuration for the connected slave by means of the CAN network.
(4) An auxiliary information identification method. Auxiliary identification information for each socket is added to the slave, such as different voltage level values are allocated to sockets respectively. Commonly, a socket voltage bus (SVB) provided with a series of precision resistors for voltage division is added, and provides different voltage levels for sockets respectively. The slave can recognize the voltage level and automatically allocate different communication addresses.
(5) A daisy-chain or token ring method. A daisy-chain channel is added among slave node, and the input end of each slave is connected to the output end of the previous slave; and information is transferred to the next slave node progressively to realize address allocation sequentially.

For the above-mentioned address allocation methods, DIP switch configuration, pairing, and sequential power-on require manual operation and are prone to coding errors. Whereas, auxiliary information identification and daisy-chain or token ring methods enable automatic address allocation, but have the problem in compatibility due to the that the wiring system is no longer a standard single-pair twisted pair, and involve more complex interfaces due to that additional signal lines need to be added to the standard communication bus. In addition, the system becomes more vulnerable to external risks, it is necessary to add additional Electrostatic Discharge (ESD) electrostatic protection and surge suppression to the new interfaces, which consequently reduces the communication reliability.

### SUMMARY

The embodiments of the present application provide an address allocation method, a battery module management method, and an electronic device.

In a first aspect, embodiments of the present application provide an address allocation method, including: acquiring first device direct-current internal resistance of a first node and second device direct-current internal resistance of a plurality of second nodes that are in communication connection with the first node; sequentially determining cable direct-current resistance between the first node and each second node among the plurality of second nodes according to a preset test rule; determining a cable resistance value of a transmission cable between the first node and each second node on the basis of the first device direct-current internal resistance, the second device direct-current internal resistance, and the cable direct-current resistance; and allocating a network address to each second node on the basis of an ascending order of the cable resistance value.

In a second aspect, embodiments of the present application provide a battery module management method, for controlling a battery energy storage system, wherein the battery energy storage system comprises a battery system controller, battery cluster management units and battery modules; the battery system controller is in communication connection with a plurality of battery cluster management units via a field bus, each battery cluster management unit is in communication connection with a plurality of battery modules via a field bus, and field bus communication address allocation is implemented based on the method according to the first aspect describe above.

In a third aspect, embodiments of the present application provide a measurement circuit for cable direct-current resistance, including: a first node, a plurality of second nodes and a bridge measurement topology circuit; the first node includes a first transceiver, a first branch and a second branch; wherein a first switch and a first matching resistor are sequentially connected in series to form the first branch; a first turn-on resistor, a second switch, a bridge measurement topology circuit, a third switch and a second turn-on resistor are sequentially connected in series to form the second branch; the first transceiver, the first branch and the second branch are connected in parallel and then connected to a field bus; each second node includes a second transceiver, a third branch, and a fourth branch; a fourth switch and a second matching resistor are sequentially connected in series to form the third branch; a fifth switch and a third turn-on resistor are sequentially connected in series to form the fourth branch; the second transceiver, the third branch, and the fourth branch are connected in parallel and then connected to the field bus; and the bridge measurement topology circuit is built between two ends of the first node, and is used for measuring the cable direct-current resistance between the first node and a second node to be measured upon the condition that the second switch, the third switch and the fifth switch in branches of the first node and the second node to be measured among the plurality of second nodes are turned on.

In a fourth aspect, embodiments of the present application provide an electronic device, including a processor and a memory, the memory stores a program or instruction that can run on the processor, and the program or instruction, when executed by the processor, implements the steps of the method of the first aspect or the second aspect described above.

In a fifth aspect, embodiments of the present application provide a readable storage medium, the readable storage medium stores a processor and a memory thereon, and the program or instruction, when executed by the processor, implements the steps of the method of the first aspect or the second aspect described above.

### BRIEF DESCRIPTION OF THE DRAWINGS

The accompanying drawings are incorporated herein and constitute a part of the description, they illustrate embodiments consistent with the present application, and are used together with the description to explain the principles of the present application.
FIG. 1 shows a schematic flow chart of an address allocation method provided in embodiments of the present application.
FIG. 2 shows a general architecture diagram of a battery energy storage system provided in embodiments of the present application.
FIG. 3 shows a schematic diagram of CAN daisy-chain engineering wiring provided in embodiments of the present application;
FIG. 4 shows a topological structure diagram of a standard dual-terminal CAN bus provided in embodiments of the present application.
FIG. 5 shows a circuit diagram of a CAN cable direct-current resistance measurement circuit provided in embodiments of the present application.
FIG. 6 shows a schematic diagram of CAN sub-device address allocation provided in embodiments of the present application.
FIG. 7 shows a flowchart of sequential communication address allocation for sub-devices provided in embodiments of the present application.
FIG. 8 shows a schematic structural diagram of an electronic device provided in embodiments of the present application.

### DETAILED DESCRIPTION

Exemplary embodiments will be described in detail herein, examples of which are illustrated in the figures. When the following description refers to the figures, the same reference numbers in different figures indicate the same or similar elements unless otherwise indicated. The implementations described in the following exemplary embodiments do not represent all of the implementations consistent with the present application. Instead, they are merely examples of devices and methods consistent with aspects of this application as detailed in the appended claims.

In the field of industrial control, an embedded device uses a field bus such as RS485, CAN, etc., to implement CAN communication at the field device level, one embedded device (referred to as a master) can monitor other embedded devices (referred to as slaves). Due to the large number of slaves, a master typically uses device communication addresses to distinguish individual slaves. Taking an energy storage system as an example, in a typical large-scale energy storage system, a large number of battery modules connected in series and in parallel are usually interconnected via a CAN bus and are uniformly managed by a higher-level management unit (such as a battery cluster controller or a battery system controller), so as to complete charge/discharge control, balancing, current sharing, fault protection, etc., and implement value-added services such as frequency regulation, peak shaving, multi-energy complementarity, power generation smoothing, and load shifting.

When a field area network is established by a field bus such as CAN, the slaves need to be distinguished by device identifications, and the simplest approach is to distinguish the slaves by device communication addresses. In a CAN of an energy storage system, a battery cluster controller or battery system controller is usually a master, and numerous battery modules are slaves; and each slave has a unique communication address, such that there will be no bus conflicts.

Existing address allocation methods including DIP switch configuration, pairing, and sequential power-on typically require manual operation and are prone to coding errors. Whereas, auxiliary information identification and daisy-chain or token ring methods enable automatic address allocation, but have the problem in compatibility due to the that the wiring system is no longer a standard single-pair twisted pair, and involve more complex interfaces due to that additional signal lines need to be added to the standard communication bus. In addition, the system becomes more vulnerable to external risks, it is necessary to add additional Electrostatic Discharge (ESD) electrostatic protection and surge suppression to the new interfaces, which consequently reduces the communication reliability.

Additionally, none of these methods can be used to automatically realize resistance matching. CAN bus topologies generally include three primary structures: daisy-chain, tree, and star configurations. Among these, the daisy-chain structure is the most widely used topology in project sites. According to the daisy-chain structure, a 120 Ω termination resistor is generally connected to each of two ends (a starting device and an end device) of the bus to realize impedance matching between the transmission line and the load, thereby reducing signal reflection while enhancing signal quality and noise immunity. Currently, initial system deployment requires manual installation of these resistors, which not only increases deployment complexity but also incurs significant labor costs.

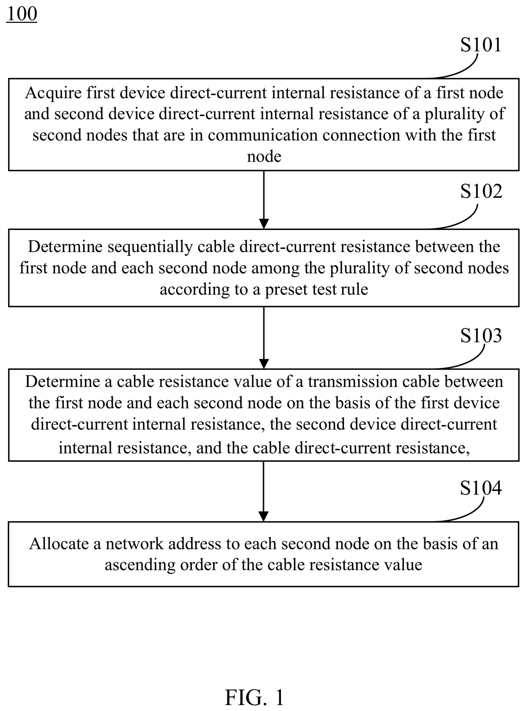

The embodiments of the present application provide an address allocation method, which determines the physical sequence of cable connection of node devices according to the cable resistance values of the transmission cables between the first node and the second node, and allocates a corresponding network address to each node, so as to reduce the complexity of the communication interface and improve the reliability of the system. As shown in FIG. 1, the address allocation method 100 may include the following steps. At S101: first device direct-current internal resistance of a first node and second device direct-current internal resistance of a plurality of second nodes that are in communication connection with the first node are acquired. At S102: according to a preset test rule, cable direct-current resistance between the first node and each second node among the plurality of second nodes are sequentially determined. At S103: on the basis of the first device direct-current internal resistance, the second device direct-current internal resistance and the cable direct-current resistance, a cable resistance value of a transmission cable between the first node and each second node is determined. At S104: on the basis of an ascending order of the cable resistance value, a network address is allocated to each second node.

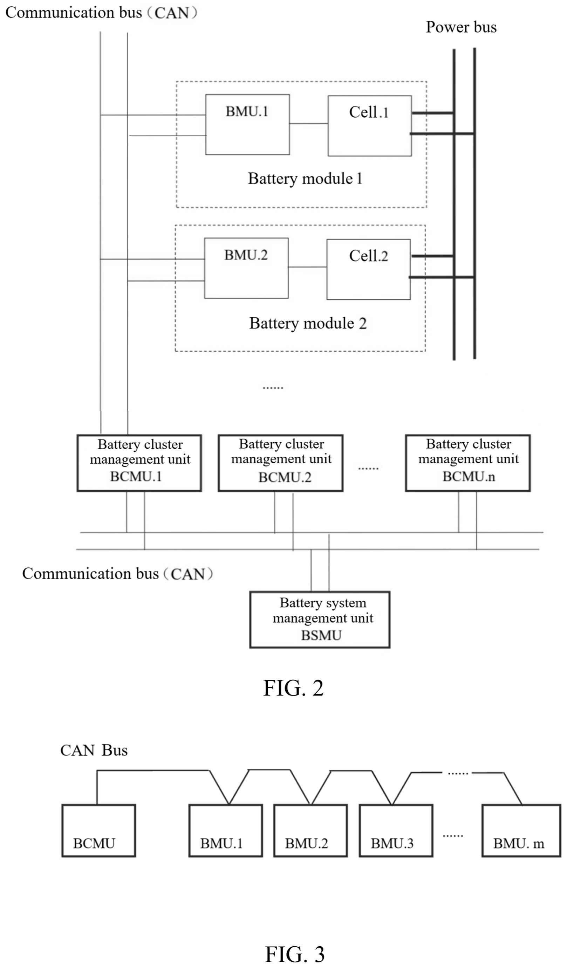

The following is explained with reference to examples. Taking an energy storage system as an example, as shown in FIG. 2, the energy storage system includes: a battery module management unit (BMU), a battery cluster management unit (BCMU), and a battery system controller (BSMU); the BMU, BCMU and BSMU constitute a standard three-level BMS technical architecture: the BCMU manages a plurality of BMUs via a CAN bus, the cable resistance values of the transmission cables between the BCMU master node and the BMU slave nodes are precisely measured, so as to identify and allocate network addresses to BMUs sequentially; similarly, the BSMU identifies and allocates network addresses to BCMUs sequentially.

Given that the resistance value of a transmission cable tends to be relatively low, it is necessary to take the device direct-current internal resistance of each node into account. To accurately determine the cable resistance value, in embodiments of the present application, the cable direct-current resistance between a master node and slave nodes is measured, the cable resistance value is determined based on the measured cable direct-current resistance and device direct-current internal resistance of each node, , further the cable resistance values are sorted in a descending order, so as to correspondingly identify the physical connection sequence of each slave node device, thereby enabling sequential allocation of network addresses to the slave nodes. Compared to existing methods such as auxiliary information identification, daisy-chain or token ring methods, in the approach of the present application no additional signal lines are needed, sequential allocation of network addresses can be realized by measurement of the cable direct-current resistance, in this way, the complexity of communication interfaces is reduced, potential introduction of external risks is avoided, and further the reliability of the system is improved.

In one possible implementation, in the above-mentioned step S101, acquiring first device direct-current internal resistance of a first node and second device direct-current internal resistance of a plurality of second nodes that are in communication connection with the first node includes that: a communication network among the first node and the plurality of second nodes is established by sequentially cascading the first node and the plurality of second nodes in a daisy-chain manner; a request message is sent to target nodes in the communication network, and request response messages that are returned from the target nodes and carry configuration information are received, the target nodes include the first node and the second nodes; and according to the configuration information carried in the request response messages, the first device direct-current internal resistance of the first node and the second device direct-current internal resistance of the plurality of second nodes are determined.

In practical implementation, since a field-bus-based network engineering wiring typically adopts a sequential daisy-chain topology, the first node and the plurality of second nodes are sequentially cascaded in the daisy-chain manner, with the engineering wiring shown in FIG. 3, and thus the communication network among the first node and the plurality of second nodes is established. Furthermore, the first node and the plurality of second nodes are cascaded in a daisy chain, so that the lengths from the second nodes to the first node are different respectively. In this way, the network address is allocated to each second node on the basis of the ascending order of the cable resistance value, which can effectively prevent network address conflicts.

Then the request message is periodically sent to the target nodes in the communication network, the target nodes respond and upload request response messages that carry configuration information; according to the configuration information carried in the request response messages, the first device direct-current internal resistance of the first node and the second device direct-current internal resistance of the plurality of second nodes are determined.

The configuration information includes a device serial number; in the above-mentioned step S102, sequentially determining cable direct-current resistance between the first node and each second node among the plurality of second nodes according to a preset test rule includes that: the target nodes are sorted according to device serial numbers, and test sequence numbers corresponding to the target nodes are determined according to a sorting result; test configuration information is sent to the target nodes, and when the target nodes are determined to enter a test state, the cable direct-current resistance between the first node and each second node among the plurality of second nodes is measured, wherein the test configuration information includes the test sequence number.

In a specific implementation, the device serial number (DSN) is a unique identification of each target node, target nodes are sorted according to the magnitude of DSN, and test sequence numbers are allocated; the established communication network is used to inform all the target nodes are informed of start of a resistance network test procedure by broadcast, and the sent test configuration information includes: the total number of tests, the duration of a single test (also known as a test cycle), and the test sequence number of a specified DSN. Apparently, if the number of slave nodes is 16 and the duration of a single test is 2 seconds, the duration of the entire test is 32 seconds.

When the target nodes are determined to enter a test state, the cable direct-current resistance between the first node and each second node among the plurality of second nodes is measured. Upon the condition that response messages from the target nodes are received, the target nodes are determined to enter the test state. That is, the established communication network is used to inform all target nodes formal initiation of the test procedure by broadcast, and if all target nodes confirm by acknowledgment, all the target nodes enter a test state.

In one possible implementation, the cable direct-current resistance between the first node and each second node among the plurality of second nodes is measured in the following way: the first node and a second node to be tested among the plurality of second nodes are controlled to be electrically connected to a field bus, so as to form a closed loop between the first node and the second node to be tested; and the cable direct-current resistance between the first node and the second node to be tested is measured by a bridge measurement topology circuit that is pre-built between the two ends of the first node.

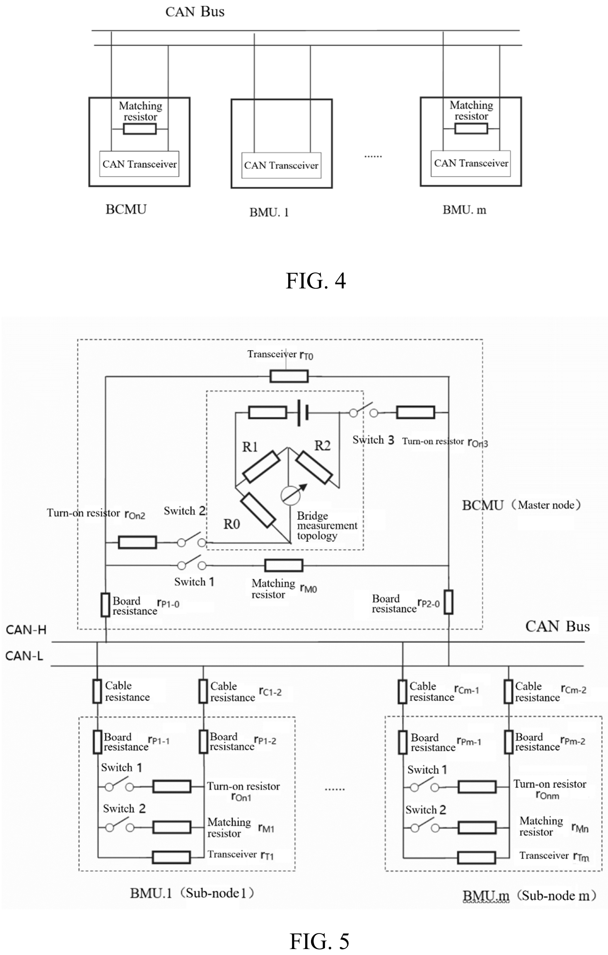

A standard dual-terminal CAN bus topology is shown in FIG. 4, the first node BCMU is connected to each second node BMU.1, ..., BMU.m via the CAN bus, and thetwo ends of the bus (a starting device and an end device) are connected with matching resistors, so as to implement impedance matching between the transmission line and the load. In embodiments of the present application, firstly, the first node and the second node to be tested are connected via the field bus so as to form a closed loop; then, the cable direct-current resistance between the first node and the second node to be tested is measured by the bridge measurement topology circuit that is pre-built between the two ends of the first node.

An embodiment of the present application further provides a measurement circuit for cable direct-current resistance, as shown in FIG. 5, the measurement circuit includes a first node, a plurality of second nodes and a bridge measurement topology circuit; wherein the first node includes a first transceiver r_{T0}, a first branch and a second branch; a first switch 1 and a first matching resistor r_{M0} are sequentially connected in series to form the first branch; a first turn-on resistor r₀ₙ₂, a second switch 2, a bridge measurement topology circuit, a third switch 3 and a second turn-on resistor r₀ₙ₃ are sequentially connected in series to form the second branch; the first transceiver, the first branch and the second branch are connected in parallel and then connected to a field bus; each second node includes a second transceiver rₜ₁ or rₜₘ, a third branch, and a fourth branch; a fourth switch 2 and a second matching resistor r_{M1} are sequentially connected in series to form the third branch; a fifth switch 1 and a third turn-on resistor r₀ₙ₁ are sequentially connected in series to form the fourth branch; the second transceiver, the third branch, and the fourth branch are connected in parallel and then connected to the field bus; and the bridge measurement topology circuit is built between the two ends of the first node, and the bridge measurement topology circuit is used for measuring the cable direct-current resistance between the first node and a second node to be measured upon the condition that the second switch 2, the third switch 3 and the fifth switch 1 in branches of the first node and the second node to be measured among the plurality of second nodes are turned on.

In conjunction with the circuit structure shown in FIG. 5, the process of measuring the cable direct-current resistance may include the following steps.

At Step 1: The slave node with the smallest test sequence number enters the test state first.

At Step 2: For the second node (slave node) to be tested, the switch 1 on the CAN interface (that is, the switch of the turn-on resistor) is turned on, so as to realize the loop of the cable to be tested. At the same time, the switch 2 on the CAN interface (that is, the switch of the matching resistor) is turned off, so as to eliminate the impact of the matching resistor.

At Step 3: All other unmeasured slave nodes maintain both Switch 1 and Switch 2 on the CAN interface in a normally open state.

At Step 4: For the first node (master node), the switch 1of the matching resistor on the CAN interface is turned off, and switches 2 and 3 of the bridge measurement topology are turned on.

At Step 5: The master node measures the direct-current resistance Zt of the total cable between the master node and the slave node to be tested by the bridge measurement topology circuit. To avoid the effects of clock drift, the measurement of resistance Zt should ideally be performed around the center of the test cycle, for example, if the test cycle is 2 seconds, test is performed between 0.9 and 1.1 seconds.

At Step 6: The cable resistance may be determined in the following way: subtract the device direct-current internal resistance (DDIR) value of the master node and the DDIR value of the slave node from the total cable direct-current resistance Zt, and the result is the actual Transmission Cable Resistance (TCR) of the twisted pair.

At Step 7: Wait until the current test cycle concludes.

At Step 8: According to the rule, the test is initiated for the slave node with the next test sequence number.

At Step 9: Repeat steps 2 to 7 to test the cable resistance value TCR test of all slave nodes.

At Step 10: Complete all tests.

The device direct-current internal resistance is a sum of internal resistance of a board and on-resistance of an analog switch at a network interface end of the target node; and the device direct-current internal resistance is determined in the following way: the device direct-current internal resistance at the network interface end of the target node is measured by a multimeter; or the first node is directly connected to the second nodes via cables respectively, and the device direct-current internal resistance at the network interface end of each second node is measured by a bridge measurement topology circuit that is pre-built between the two ends of the first node.

In an implementation, in the factory calibration phase, device direct-current internal resistance (DDIR) of each node is tested, and in conjunction with the circuit structure shown in FIG. 5, test for DDIR before delivery comprises the following steps. At Step 1: After the first node (master node) is powered on, the calibration subroutine is executed, Switch 1 is turned off, and Switch 2 and Switch 3 are turned on. The resistance between the two ends of the CAN interface, that is, the DDIR of the master node, is measured by a method for measuring low resistance using a multimeter with high precision (such as a four-wire measurement method or a four-wire measurement plus constant current source method, so as to reduce resistance error of a feeder line); alternatively, a bridge topology fixture for low resistance measurement may be set up to implement automated measurement. At Step 2: After the second node (slave node) is powered on, the calibration subroutine is executed, Switch 1 is turned on and Switch 2 is turned off; similar to the master node, a multimeter or a bridge topology fixture is used to measure the DDIR of the slave node. Alternatively, the measurement bridge topology within the master node may also be utilized to set up the fixture. For example, the master node and the slave node are directly connected in a one-to-one manner, and the connecting cable is as short as possible; after executing the cable resistance test procedure and obtaining the cable direct-current resistance Zt, the DDIR of the master node is subtracted to obtain the DDIR of the slave node (assuming that the connecting cable is as short as possible and the cable resistance is 0).

In one possible implementation, in the above-mentioned step S104, after allocating a network address to each second node on the basis of an ascending order of the cable resistance value, the address allocation method 100 further includes: the first node sends an address allocation message to each second node, wherein the address allocation message includes a device serial number of the second node and a network address of the second node.

In a specific implementation, allocating a network address to each second node on the basis of an ascending order of the cable resistance value includes the following steps. At Step 1: The master node and the slave node exit the test state and return to initial states thereof; and all switches on the CAN interface of all nodes are restored to normally open states thereof. The CAN network resumes normal communication. At Step 2: The master node sorts the TCR values of all slave nodes in an ascending order. At Step 3: The smaller the TCR value, the shorter the cable length, the closer to the master node, and the lower the allocated device network address (DNA) value; and the addresses are allocated sequentially from 1. At Step 4: The master node saves all DNA values in the system configuration table, and then broadcasts and notifies each slave node the specified DSN and the allocated network address DNA by the CAN network; and each slave node with the specified DSN returns a confirmation and saves its allocated DNA locally. At Step 5: network addresses are allocated to all slave nodes sequentially.

In one possible implementation, in the above-mentioned step S104, after allocating a network address to each second node on the basis of an ascending order of the cable resistance value, the address allocation method 100 further includes: a first matching resistor is configured between the two ends of the first node, and a second matching resistor is configured between the two ends of a second node with a highest network address value among the plurality of second nodes.

In an implementation, in conjunction with the circuit structure shown in FIG. 5, a first matching resistor is configured between the two ends of the first node by means of an analog switch, and a second matching resistor is configured between the two ends of a second node with a highest network address value among the plurality of second nodes. In some cases, the master node turns on Switch 1 on the CAN interface thereof to configure a matching resistor at the starting end of the network; the slave node with the highest DNA value turns on Switch 2 on the CAN interface thereof to configure a matching resistor at the terminal end of the network; all other nodes and all switches maintain normally open states; and each node stores the situation that whether a matching resistor is configured locally.

In one possible implementation, after receiving request response messages that are returned from the target nodes and carry configuration information, the method further includes that: the configuration information of the target nodes is stored in a system configuration table; and configuration information change message sent by a second target node is acquired , and configuration information corresponding to the second target node is updated in the system configuration table according to configuration change information carried in the configuration information change message.

The system configuration table is shown in Table 1:

**Table 1 System Configuration Table**

| Master node configuration |
|---|
| Number of slave nodes = m |
| 1# Slave node configuration |
| 2# Slave node configuration |
| ..... |
| m# Slave node configuration |

The number of slave nodes and the configuration information of the master node and each slave node may be obtained from the above system configuration table. The configuration information of nodes may be shown in Table 2:

**Table 2 Node configuration table**

| |
|---|
| Device serial number (DSN) |
| Device direct-current internal resistance (DDIR) |
| Device network address (DNA) |
| Transmission cable resistance (TCR) |

The device serial number (DSN) may be used as an index of the configuration information of each target node, and the device direct-current internal resistance, the allocated device network address, and the calculated transmission cable resistance are all stored in the system configuration table.

When configuration information of the second target node changes, the second target node proactively reports a configuration change message, and configuration information corresponding to the second target node is updated in the system configuration table according to configuration change information carried in the configuration information change message.

During implementation, if a second node is replaced in situ, for example, if a sub-node device fails and is removed, then a new device is inserted as a replacement. When being connected to the network, the new device would proactively broadcast its own DSN when being connected to the network, and applies to the system for address configuration. Upon recognizing this scenario (an original node exits and a new node joins), the master node executes the following steps: the master node updates the sub-device configuration table; for the sub-device with a replaced communication address, the original DSN is replaced by the new DSN; and by means of CAN communication, the master node informs the new device to use the configuration information of the original node, including the allocated sequential network address and whether the matching resistor is configured.

After updating configuration information corresponding to the second target node in the system configuration table, the method further includes that: an updated cable resistance value of a transmission cable between the first node and each second node is determined according to configuration information of each target node in an updated system configuration table; on the basis of an ascending order of the updated cable resistance value, a temporary network address is allocated to each second node; and a second matching resistor is configured between the two ends of a second node with a highest largest temporary network address value among the second nodes.

Optionally, after allocating a temporary network address to each second node on the basis of an ascending order of the updated cable resistance value, the method further includes that: a network address of each second node is updated to the temporary network address; and the first node sends an address allocation message to each second node, wherein the address allocation message includes a device serial number of the second node and an updated network address of the second node.

In the operation and maintenance phase, complex scenarios such as device expansion or partial replacement may also occur. Simple and quick configuration, automatic identification, and automatic update of address configuration are more important. Intelligent collaboration among various devices becomes important and maybe categorized into the following scenarios.

In the first possible scenario: the number of sub-nodes reduces, for example, a certain sub-node device fails and is removed from the socket for maintenance. For the CAN, this is equivalent to exit of certain sub-node. When the master node detects that a sub-node has exited from the network, the following steps are executed.

If the exiting sub-node is an end sub-device (that is, the sub-node with the highest DNA value), then the master node informs the sub-node with the second highest DNA value to configure the terminal matching resistor, all other system configurations remain unchanged. If the exiting sub-node is an intermediate sub-device (that is, the sub-node not with the highest DNA value), then all system configurations remain unchanged. Alternatively, the initial automatic configuration process may be re-executed based on maintenance requirements or practices of specific users, so as to reallocate addresses in sequence, thereby preventing discontinuities in the sub-node address range.

In the second possible scenario: the number of sub-nodes increases, which is equivalent to system expansion. A newly inserted sub-node will proactively broadcast its own DSN, and applies to the system for address configuration; thus, addition of a new device may be determined. Upon recognizing this scenario, the master node performs the following processing steps.

The initial automatic configuration is re-executed to implement a temporary reallocation of addresses, the original address allocation results and the new address allocation results are analyzed and compared; if the highest address value is allocated to the newly-added sub-node , which means that system expansion is sequential expansion (that is, the newly-added sub-device is appended after the existing sub-devices), the system adopts the latest allocation results and informs the new node with the highest address value to configure matching resistance at the terminal end; if an intermediate address value is allocated the newly-added sub-node, it means that the system expansion is gap-filling expansion, that is, the newly-added sub-device is inserted into an empty socket among the existing devices). In this case, the system adopts the latest allocation results and reports the information of all sub-nodes whose network addresses have changed (indexed by DSN) to the maintenance system.

By the methods described above, the system can identify and update address configuration automatically in the operation and maintenance phase in cases of device expansion, replacement and reduction. In particular, when a device at the start end or the terminal end changes, the automatic and dynamic synchronous change of the terminal matching resistor can be implemented. The sub-node with the highest network address value is detected in real time, and the node is notified to dynamically configure the matching resistor by closing the switch of the matching resistor.

By adopting the address allocation method provided in embodiments of the present application, automatic configuration of the matching resistor can be implemented, which mitigates the most common operational issue of manual matching resistor adjustment oversights, and eliminates the subsequent operational hazards in the CAN, such as occasional communication abnormalities and positioning difficulties caused by resistor mismatch.

Hereinafter, the above steps will be described in detail with reference to specific examples.

For example, a company provides a high-capacity battery energy storage product for core and aggregation equipment rooms of a telecommunications operator, which serves as a replacement for the existing lead-acid battery system. The energy storage product is comprised of up to 192 parallel-connected 48 V/100 Ah smart lithium battery modules, these modules are organized into battery cabinets, with each cabinet containing 32 modules and managed by its dedicated Battery Cabinet Management Unit (BCMU) via a CAN network; a maximum of 6 such battery cabinets are connected in parallel to form a complete energy storage system, which is equipped with a central BSMU, the BSMU manages all 6 BCMUs via the CAN network, thereby establishing a standard three-layer BMS architecture.

In the original design, 32 battery modules in each CAN network are allocated communication addresses ranging from 1 to 32 by address arbitration. Apparently, the communication address is completely inconsistent with the actual physical address of the socket, which is inconvenient for daily operation and maintenance. Therefore, with the solution provided in the present application, the BMU in the battery module, the BCMU and the BSMU are modified, and sequential allocation of communication addresses of each battery module and the BCMU in the CAN network can be well implemented.

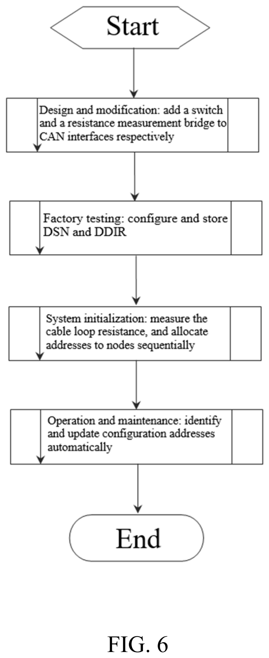

As shown in FIG. 6, in a product design stage, hardware modification needs to be performed on a CAN interface of each node, that is, an analog switch with a low resistance value is added to a slave node, and a bridge topology for low resistance measurement is added to a master node. Additionally, a twisted pair and the CAN interfaces need to be analyzed.
1) The CAN communication cable is a twisted pair, which is also the most common transmission medium in integrated wiring engineering. Generally, links of Category 3 are required not to exceed 170 Ω, while links above Category 3 are required not to exceed 30 Ω. In ISO/IEC 11801, it is specified that the direct-current resistance of twisted pair should not exceed 19.2 Ω, and the difference in direct-current resistance between cables in each twisted pair should be less than 0.1 Ω. Therefore, the direct-current loop resistance of cables of slave nodes to be measured is of the order of 0.1 Ω.
2) The CAN interface of each node device is usually deployed near an external connector, and the resistance value of a board resistor of a printed circuit board (PCB) is also of the order of 0.1 Ω. However, for a CAN transceiver commonly used in the industry, the input resistance value of the CAN transceiver is generally more than 20 KΩ. In the present application, a high-speed CAN transceiver TJA1051T/E is selected, which features a typical input impedance of 30 kΩ and offers ideal passive performance of the CAN bus during power-off(i.e., the capability of disconnecting the transceiver from the bus), which is suitable for measuring the direct-current loop resistance of a cable.
3) Since the direct-current loop resistance of a cable is of the order of 0.1 Ω, in the bridge circuit in the master node, a precision resistor of 1.0 Ω is selected as R0, while precision resistors of 10 Ω are selected as R1 and R2, with a multiplier of ratio arm being k = R1/R2 = 1.0, so as to obtain a highest test sensitivity.
4) Similarly, since the direct-current loop resistance of a cable is of the order of 0.1 Ω, the on-resistance of the analog switch to be selected cannot be too high, otherwise the measurement accuracy will be affected. Therefore, a dual SPST analog switch TS5A23166, featuring a typical low on-resistance down to 0.9 Ωand a maximum flatness of only 0.2 Ω, is selected in this case.

During factory testing, the DDIR of each node must be tested, and is configured and stored together with the DSN. During debugging, a self-developed fixture device is utilized. The core of this fixture device is a Kelvin bridge (in a double bridge method) capable of performing precise measurement of the low resistance value, and transmitting the measured value to the node device by communication for configuration and storage, thereby enhancing the automation level of production debugging.

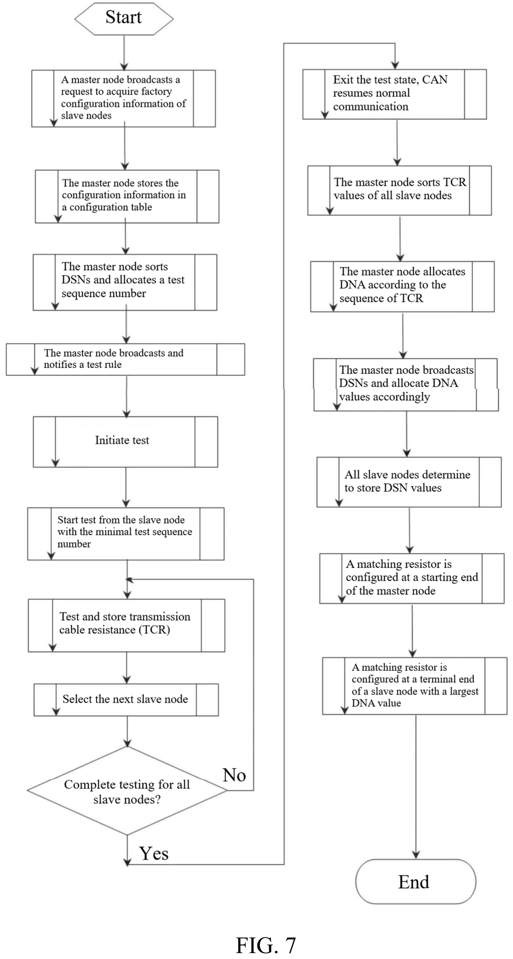

During system initialization, firstly, the master node BCMU and the slave nodes BMU in each cabinet are sequentially connected by daisy-chain cascading of the CAN bus,; similarly, the master node BSMU of the system control unit and the slave nodes BCMU of parallel cabinets are cascaded in the daisy chain by the CAN bus. As shown in FIG. 7, taking one battery cabinet as an example, the address sequence and matching resistors are configured for each slave node BMU by the following specific steps.
1) The BCMU and slave nodes BMUs of all in the cabinet start up and operate. The slave nodes actively request for address configuration when accessing the network at the first time; and the master node BCMU acquires and stores the DSN and DDIR of each slave.
2) The master node BCMU sorts the slave nodes according to the DSNs, and allocates test sequence numbers.
3) The master node broadcasts and notifies initiation of a resistance network test and the test rule: the total number of tests, the duration of a single test, and the test sequence number of a specified DSN. Each slave node returns a confirmation. Apparently, the number of slave nodes is 32, the duration of a single test is 2 seconds, the duration of the entire test is 64 seconds.
4) The master and slave nodes collaborate to sequentially test the Transmission Cable Resistance (TCR) of all slave nodes.
5) The master node sorts all measured TCR in an ascending order, and sequentially allocates addresses from 1 by using the DSN of slave nodes as index. The node with the lowest TCR is provided with the DNA of the lowest value.
6) The master node broadcasts and notifies each slave node of the network address DNA which is allocated by the specified DSN. Each specified slave node returns a confirmation, and thus, the network addresses are allocated to all the slave node sequentially.
7) The master node and the slave node with the highest address value complete resistance matching at the start and terminal ends.

Other battery cabinets may be configured to operate in parallel, so as to complete sequential allocation of BMU addresses for all slave nodes. Similarly, the sequential allocation of BMU addresses may also be performed.

Since the direct-current loop resistance of a cable to be measured is relatively low, an analog switch with low on-resistance is selected to enhance the measurement accuracy. Due to different suppliers and batches, the on-resistance Ron of analog switches may vary slightly, which has been addressed by using the device direct-current internal resistance (DDIR) in factory test for configuration. Additionally, there may be a problem in flatness of the on-resistance Ron, i.e., Ron changes with a voltage of a power supply and an input voltage, and a difference between the maximum and the minimum of Ron is the flatness of the same. According to component datasheets from manufacturers, the flatness is ideal, i.e., the Ron is basically stable when the voltage of the power supply is relatively high (such as above 3.3 V) or the input voltage is relatively high (such as above 2.5 V).

Therefore, on one hand, in terms of the power supply for an analog switch, it is advisable to select a high supply voltage, for example, TS5A23166 with an operating voltage range of -0.5 V to 6.5 V. Thus, the flatness of Ron is ideal when a standard 5.0 V power supply is provided. On the other hand, when the DDIR of nodes are tested in the factory testing phase, multi-point test at different input voltages may be performed, and test results are stored in in the node configuration table; and when measuring the direct-current loop resistance of a cable, a master can perform fitting or compensation based on the actual input voltage, so that the loop resistance can be measured in higher accuracy.

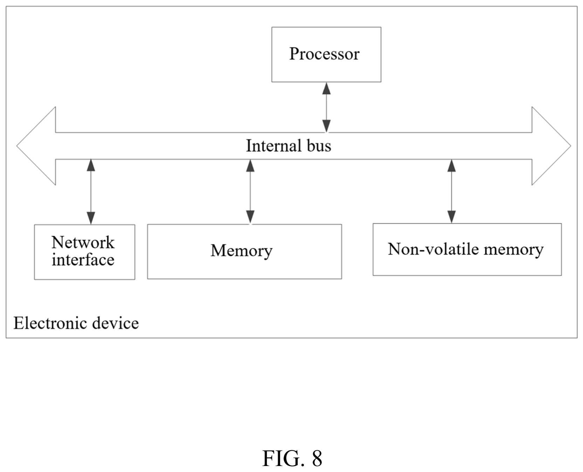

FIG. 8 shows a schematic structural diagram of the hardware of an electronic device that implements the embodiments of the present application, referring to the figure, at the hardware level, the electronic device includes a processor, and optionally, an internal bus, a network interface, and a memory. The memory may include an internal memory, for example a high-speed random access memory (RAM), and may also include a non-volatile memory (non-volatile memory), such as at least one disk storage, etc. Of course, the electronic device may also include hardware required for other services.

The processor, network interface and memory may be interconnected by an internal bus, which may be an Industry Standard Architecture (ISA) bus, a Peripheral Component Interconnect (PCI) bus or an Extended Industry Standard Architecture (EISA) bus, etc. The bus may be divided into an address bus, a data bus, a control bus, etc. For ease of representation, only one bidirectional arrow is used in the figure, but it does not mean that there is only one bus or one type of bus. The memory is used to store programs. Specifically, the program may include program codes, and the program codes include computer operation instructions. The memory may include an internal memory and a non-volatile memory, and provides instructions and data to the processor. The processor reads corresponding computer program from the non-volatile memory into the memory and then runs it, forming a device for locating the target user at the logical level. The processor execute programs store in the memory, and specifically perform the method disclosed in the embodiment shown in FIG. 1 and implement the functions and beneficial effects of the various methods described in the foregoing method embodiments, which will not be repeated here.

The method disclosed in the embodiment shown in FIG. 1 of the present application may be applied to a processor or implemented by a processor. The processor may be an integrated circuit chip with signal processing capabilities. In the implementation process, each step of the above method may be completed by an integrated logic circuit in the form of hardware in the processor or an instruction in the form of software. The above processor may be a general-purpose processor, including a central processing unit (CPU), a network processor (NP), etc.; it may also be a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present application may be implemented or executed. A general-purpose processor may be a microprocessor or the processor may also be any conventional processor, etc. The steps of the method disclosed in the embodiments of the present application may be directly embodied as a hardware decoding processor for execution, or may be implemented by a combination of hardware and software modules in the decoding processor. The software module may be located in a storage medium well-known in the art, such as a random access memory, a flash memory, a read-only memory, a programmable read-only memory, or an electrically erasable programmable memory, a register, etc. The storage medium is located in the memory, and the processor reads information in the memory and completes the steps of the above method in combination with its hardware.

The electronic device may also perform the various methods described in the foregoing method embodiments, and achieve the functions and beneficial effects of the various methods described in the foregoing method embodiments, which will not be repeated here.

In addition to software implementation methods, the electronic device of the present application does not exclude other implementation methods, such as logic devices or a combination of software and hardware, etc., that is, the execution subject of the following processing flow is not limited to each logic unit, but may also be hardware or logic devices.

An embodiment of the present application further proposes a computer-readable storage medium, which stores one or more programs, when the one or more programs are executed by an electronic device including a plurality of applications, the electronic device implements the method disclosed in the embodiment shown in FIG. 1 and implement functions and beneficial effects of the methods described in the foregoing method embodiments, which will not be repeated. The computer-readable storage medium includes read-only memory (ROM), random access memory (RAM), magnetic disk or optical disk.

Furthermore, an embodiment of the present application further provides a computer program product, the computer program product includes a computer program stored on a non-transitory computer-readable storage medium, the computer program includes program instructions, the program instructions, when executed by a computer, implements the method disclosed in the embodiment shown in FIG. 1 and implements functions and beneficial effects of the methods described in the foregoing method embodiments, which will not be repeated.

In summary, the above descriptions are merely preferred embodiments of the present application and are not intended to limit the protection scope of the present application. Any modification, equivalent replacement, improvement, etc., that is made within the spirit and principle of the present application should be included within the protection scope of the present application.

The system, device, module or unit described in the above embodiments may be specifically implemented by a computer chip or entity, or a product with certain functions. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

Computer readable media include permanent and non-permanent, removable and non-removable media that may be used to store information by any method or technology. Information may be computer-readable instructions, data structures, program modules or other data. Examples of computer storage media include, but are not limited to, Phase Change Memory (PCM), Static Random-Access Memory (SRAM), Dynamic Random Access Memory (DRAM), other types of random access memory (RAM), Read-Only Memory (ROM), Electrically Erasable Programmable Read Only Memory (EEPROM), Flash memory or other memory technology, Compact Disc Read-Only Memory (CD-ROM), Digital Video Disc (DVD) or other optical storage, magnetic cassettes, magnetic tape magnetic disk storage or other magnetic storage devices or any other non-transmission media that may store information that is accessible to a computing device. According to the definition in this document, computer-readable media do not include temporary computer-readable media (transitory media), such as modulated data signals and carrier waves.

It should be noted that, the terms "include", "comprise" or any other variations thereof are intended to cover a non-exclusive inclusion, such that a process, method, article, or device that comprises a series of elements not only comprises those elements, but also comprises other elements that are not explicitly listed, or further comprises elements that are inherent to the process, method, article, or device. Without further limitations, an element limited by "comprising a..." does not exclude the presence of other identical elements in the process, method, article, or device that includes the element.

Each embodiment in this description is described in a progressive manner, and the same or similar parts between the embodiments may be referred to each other, and each embodiment focuses on the differences from other embodiments. In particular, for the system embodiment, since it is basically similar to the method embodiment, the description is relatively simple, and the relevant parts may be referred to the partial description of the method embodiment.

## Claims

1. An address allocation method, comprising:
acquiring first device direct-current internal resistance of a first node and second device direct-current internal resistance of a plurality of second nodes that are in communication connection with the first node;
sequentially determining cable direct-current resistance between the first node and each second node among the plurality of second nodes according to a preset test rule;
determining a cable resistance value of a transmission cable between the first node and each second node on the basis of the first device direct-current internal resistance, the second device direct-current internal resistance and the cable direct-current resistance; and
allocating a network address to each second node on the basis of an ascending order of the cable resistance value.

2. The method according to claim 1, wherein acquiring the first device direct-current internal resistance of the first node and the second device direct-current internal resistance of the plurality of second nodes that are in communication connection with the first node comprises:
establishing a communication network among the first node and the plurality of second nodes by sequentially cascading the first node and the plurality of second nodes in a daisy-chain manner;
sending a request message to target nodes in the communication network, and receiving request response messages that are returned from the target nodes and carry configuration information, the target nodes comprising the first node and the second nodes; and
determining the first device direct-current internal resistance of the first node and the second device direct-current internal resistance of the plurality of second nodes according to the configuration information carried in the request response messages.

3. The method according to claim 2, wherein the configuration information comprises a device serial number; and sequentially determining the cable direct-current resistance between the first node and each second node among the plurality of second nodes according to the preset test rule comprises:
sorting the target nodes according to device serial numbers, and determining test sequence numbers corresponding to the target nodes according to a sorting result;
sending test configuration information to the target nodes, and measuring, in the case of determining that the target nodes enter a test state, the cable direct-current resistance between the first node and each second node among the plurality of second nodes, wherein the test configuration information comprises a test sequence number.

4. The method according to claim 3, wherein determining that the target nodes enter the test state comprises:
determining, in the case of receiving a response messages from the target nodes, that the target nodes enter a test state.

5. The method according to claim 3, wherein measuring the cable direct-current resistance between the first node and each second node among the plurality of second nodes comprises:
controlling the first node and a second node to be tested among the plurality of second nodes to be electrically connected to a field bus, so as to form a closed loop between the first node and the second node to be tested; and
measuring, by a bridge measurement topology circuit that is pre-built between two ends of the first node, the cable direct-current resistance between the first node and the second node to be tested.

6. The method according to claim 2, wherein determining the cable resistance value of the transmission cable between the first node and each second node on the basis of the first device direct-current internal resistance, the second device direct-current internal resistance and the cable direct-current resistance comprises:
determining device direct-current internal resistance on the basis of the first device direct-current internal resistance and the second device direct-current internal resistance, and determining a difference between the cable direct-current resistance and the device direct-current internal resistance as the cable resistance value.

7. The method according to claim 6, wherein the device direct-current internal resistance is a sum of internal resistance of a board and on-resistance of an analog switch at a network interface end of a target node; and the device direct-current internal resistance is determined by:
measuring, by a multimeter, the device direct-current internal resistance at the network interface end of the target node; or
directly connecting the first node to the second nodes via cables respectively, and measuring, by a bridge measurement topology circuit that is pre-built between two ends of the first node, the device direct-current internal resistance at a network interface end of each second node.

8. The method according to claim 1, wherein after allocating the network address to each second node on the basis of the ascending order of the cable resistance value, the method further comprises:
sending, by the first node, an address allocation message to each second node, wherein the address allocation message comprises a device serial number of the second node and a network address of the second node.

9. The method according to claim 1, wherein after allocating the network address to each second node on the basis of the ascending order of the cable resistance value, the method further comprises:
configuring a first matching resistor between two ends of the first node, and configuring a second matching resistor between two ends of a second node with a highest network address value among the plurality of second nodes.

10. The method according to claim 2, wherein after receiving the request response messages that are returned from the target nodes and carry configuration information, the method further comprises:
storing the configuration information of the target nodes in a system configuration table; and
acquiring a configuration information change message sent by a second target node, and updating configuration information corresponding to the second target node in the system configuration table according to configuration change information carried in the configuration information change message.

11. The method according to claim 10, wherein after updating the configuration information corresponding to the second target node in the system configuration table, the method further comprises:
determining, according to configuration information of each target node in an updated system configuration table, an updated cable resistance value of the transmission cable between the first node and each second node;
allocating a temporary network address to each second node on the basis of an ascending order of the updated cable resistance value; and
configuring a second matching resistor between two ends of a second node with a highest temporary network address value among the plurality second nodes.

12. The method according to claim 11, wherein after allocating the temporary network address to each second node on the basis of the ascending order of the updated cable resistance value, the method further comprises:
updating a network address of each second node to the temporary network address; and
sending, by the first node, an address allocation message to each second node, the address allocation message comprising a device serial number of the second node and an updated network address of the second node.

13. A battery module management method, for controlling a battery energy storage system, the battery energy storage system comprising a battery system controller, battery cluster management units and a battery modules; the battery system controller is in communication connection with a plurality of battery cluster management units via a field bus, each battery cluster management unit is in communication connection with a plurality of battery modules via a field bus, and field bus communication address allocation is implemented based on the method according to any one of claims 1 to 12.

14. A measurement circuit for cable direct-current resistance, comprising:
a first node, the first node comprises a first transceiver, a first branch and a second branch; wherein a first switch and a first matching resistor are sequentially connected in series to form the first branch; a first turn-on resistor, a second switch, a bridge measurement topology circuit, a third switch and a second turn-on resistor are sequentially connected in series to form the second branch; and the first transceiver, the first branch and the second branch are connected in parallel and then connected to a field bus;
a plurality of second nodes, wherein each second node comprises a second transceiver, a third branch and a fourth branch; a fourth switch and a second matching resistor are sequentially connected in series to form the third branch; a fifth switch and a third turn-on resistor are sequentially connected in series to form the fourth branch; and the second transceiver, the third branch, and the fourth branch are connected in parallel and then connected to the field bus; and
a bridge measurement topology circuit, which is built between two ends of the first node, and used for measuring the cable direct-current resistance between the first node and a second node to be measured upon the condition that the second switch, the third switch and the fifth switch in branches of the first node and the second node to be measured among the plurality of second nodes are turned on.

15. An electronic device, the electronic device comprises a processor and a memory, the memory stores a program or instruction that is executable on the processor, and the program or instruction, when executed by the processor, implements steps of the method according to any one of claims 1 to 13.

16. A readable storage medium, the readable storage medium stores a program or instruction thereon, and the program or instruction, when executed by the processor, implements steps of the method according to any one of claims 1 to 13.
